# EUROPÄISCHE PATENTSCHRIFT

(11) **EP 2 052 811 B1**
(45) Veröffentlichungstag und Bekanntmachung des Hinweises auf die Patenterteilung: **22.09.2010**
(21) Anmeldenummer: 08405249.7
(22) Anmeldetag: 03.10.2008
(51) Int. Cl.: B23Q 17/22, B23Q 39/04, B23B 3/26, B23B 29/034

(54) **Transfermaschine mit einer Plandreheinheit**
Transfer machine with a plan rotating unit
Machine de transfert dotée d'une unité de rotation planaire

(30) Priorität: 23.10.2007 CH 16552007
(43) Veröffentlichungstag der Anmeldung: 29.04.2009
(73) Patentinhaber: Imoberdorf Holding AG, 4702 Oensingen (CH)
(72) Erfinder: Barbetta, Attila, 3367 Thörigen (CH); Imoberdorf, Anton, 4450 Sissach (CH)
(74) Vertreter: Ullrich, Gerhard

(56) Entgegenhaltungen:
- EP-A- 1 190 793
- WO-A-2007/112611
- DE-U1- 20 020 417

## Beschreibung

### Anwendungsgebiet der Erfindung

Die vorliegende Erfindung betrifft eine Transfermaschine mit einer Transferebene, an deren Peripherie eine Vielzahl von Spannvorrichtungen zur Aufnahme der zu bearbeitenden Werkstücke angeordnet ist. Ausserhalb der Transferebene sind stationäre Bearbeitungseinheiten positioniert, an welche die Spannvorrichtungen taktweise herangeführt werden. Die Transfermaschine hat zumindest eine Bearbeitungseinheit in Gestalt einer Plandreheinheit. Diese besitzt einen Längsschlitten, auf dem die Plandreheinheit ruht und der auf einem Bett in einer y-Richtung verfahrbar ist. Ferner hat die Plandreheinheit einen Plandrehkopf, in dem zwei zueinander gegensinnig in einer x-Richtung längslaufende Planschieber angeordnet sind, die jeweils als Zerspanungswerkzeug einen Drehmeissel tragen. Zur Positionsbestimmung der Planschieber ist ein Messsystem vorgesehen. Zur Übertragung des rotierenden Antriebs auf den Plandrehkopf dient eine angetriebene Spindel. Schliesslich ist die Plandreheinheit mit einer Vorschubeinheit zur Verstellung der Planschieber in der x-Richtung ausgestattet.

### Stand der Technik

Aus der WO 2007/112 611 A1 ist eine Vorrichtung zur Materialbeladung an einer Transfermaschine in Gestalt einer Rundtaktmaschine bekannt. Ausserhalb der Transferebene sind stationäre Bearbeitungseinheiten positioniert, die als Plandreheinheiten beschaffen sein können, welche jeweils einen Plandrehkopf aufweisen, in dem zwei zueinander gegensinnig in x-Richtung längslaufende Planschieber angeordnet sind, die jeweils ein Zerspanungswerkzeug tragen. Zur Positionsbestimmung der Planschieber sind Messeinrichtungen vorgesehen.

In der DE 200 20 417 U1 ist eine Trenn- und Endenbearbeitungsstation für Werkstücke mit mindestens einem umlaufenden Werkzeug und nichtrotierendem Werkstück, insbesondere Rohre, offenbart. Die zur Station gehörige Mess- und programmierbare Steuereinrichtung beruht auf einem Schleifkontaktsystem.

CNC gesteuerte Plandreheinheiten sind in der Praxis bereits im Einsatz. Für eine möglichst breite Anwendung zur Bearbeitung von kleineren und grösseren Werkstücken auch in serieller Fertigung, bestehen an sich drei Forderungen. Bei grossen Werkstücken und hoher Zerspanungsleistung müssen die Drehmeissel über einen weiten Hub zustellbar sein und somit die Maschine in der Lage, grosse Kräfte aufzunehmen. Überdies wird bei Werkstücken für bestimmte Verwendung eine hohe Präzision gefordert. Die heutigen Plandreheinheiten vermögen diese drei Wesensforderungen in der Summe nicht optimal zu erfüllen, entweder es müssen Abstriche an der Hubgrösse oder der verträglichen Schneidkräfte gemacht werden oder es sind Verminderungen in der Präzision der Bearbeitung in Kauf zu nehmen. Daher war es bisher nicht möglich, an kostenintensiven und daher möglichst universell zu verwendenden Transfermaschinen, Plandreheinheiten einzusetzen, die hierbei ein Höchstmass aller drei Elementaranforderungen erfüllen.

### Aufgabe der Erfindung

Aus den bisherigen Nachteilen des gegenwärtigen Standes der Technik, liegt der Erfindung die Aufgabe zugrunde, eine Plandreheinheit für den Einsatz an einer Transfermaschine zu schaffen, welche einen grossen radialen Hub der Schneidwerkzeuge zulässt und grosse Schnittkräfte mit hoher Präzision bei der Bearbeitung ermöglicht. Im Interesse der Maschineneffektivität muss mit hohen Drehzahlen gefahren werden, wobei Präzisionsverluste durch schwankende thermische Einflüsse und sich verändernde Schmiersituationen möglichst gering zu halten sind.

### Übersicht über die Ereindung

Die Transfermaschine hat eine sich longitudinal oder rotierend bewegliche Transferebene, an deren Peripherie eine Vielzahl von Spannvorrichtungen zur Aufnahme der zu bearbeitenden Werkstücke angeordnet ist. Ausserhalb der Transferebene befinden sich stationäre Bearbeitungseinheiten, an welche die Spannvorrichtungen taktweise herangeführt werden. Zumindest eine der Bearbeitungseinheiten hat die Gestalt einer Plandreheinheit, welche einen Längsschlitten aufweist, auf dem die Plandreheinheit ruht und der auf einem Bett in einer y-Richtung verfahrbar ist. In einem Plandrehkopf sind zwei zueinander gegensinnig in einer x-Richtung längslaufende Planschieber angeordnet, die jeweils als Zerspanungswerkzeug einen Drehmeissel tragen. Zur Positionsbestimmung der Planschieber dient ein Messsystem. Zur Übertragung des rotierenden Antriebs auf den Plandrehkopf ist eine angetriebene Spindel vorhanden. Zur Verstellung der Planschieber in der x-Richtung ist die Plandreheinheit mit einer Vorschubeinheit ausgestattet. Im Plandrehkopf ist das Messsystem integriert. Vom Messsystem erstreckt sich ein Kabel im rotierenden Teil der Plandreheinheit bis in einen Rotor, um den vom Messsystem erfassten Wert induktiv auf eine Statorspule in ein nicht rotierendes Teil der Plandreheinheit für die Weiterverarbeitung zu übertragen. Zur Verstellung der Planschieber in der x-Richtung ist an der Spindel die Vorschubeinheit angeordnet, welche von einer Hydraulikeinspeisung über ein stetig geregeltes Wegeventil angesteuert wird.

Die nachfolgenden Merkmale beziehen sich auf spezielle Ausführungen der Erfindung: Das Messsystem besteht aus einem im Plandrehkopf angeordneten Lesekopf und einem an jedem Planschieber vorhandenen Massstab. Die Vorschubeinheit umfasst einen konzentrisch zur Spindel angeordneten und mit der Spindel verbundenen Hydraulikkolben.

Der Hydraulikkolben liegt zwischen einem hinteren Druckkammerbereich und einem vorderen Druckkammerbereich. Die beim Zerspanungsvorgang entstehenden und über die Drehmeissel in die Vorschubeinheit eingeleiteten Reaktionskräfte wirken zumindest im wesentlichen auf den Hydraulikkolben, der die Spindel kraftmässig axial damit entlastet.

Koaxial zur Spindel ist eine Verlängerung der Kolbenstange angeordnet.

Ein weiteres Messsystem kann zur Ermittlung der Zustellgeschwindigkeit der Drehmeissel vorgesehen werden.

Die Transfermaschine ist als Längstransfermaschine oder als Rundtaktmaschine ausgebildet.

### Kurzbeschreibung der beigefügten Zeichnungen

Es zeigen:

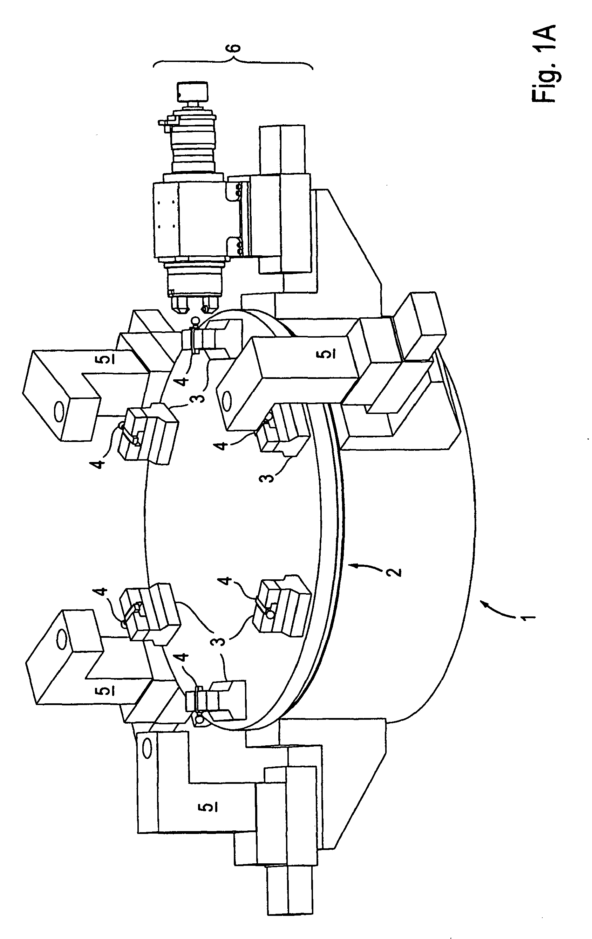

- Figur 1A -: eine Rundtaktmaschine mit Transfertisch, darauf positionierten Spannvorrichtungen und peripher zum Tisch angeordneten Bear- beitungseinheiten, in perspektivischer Prinzipansicht;

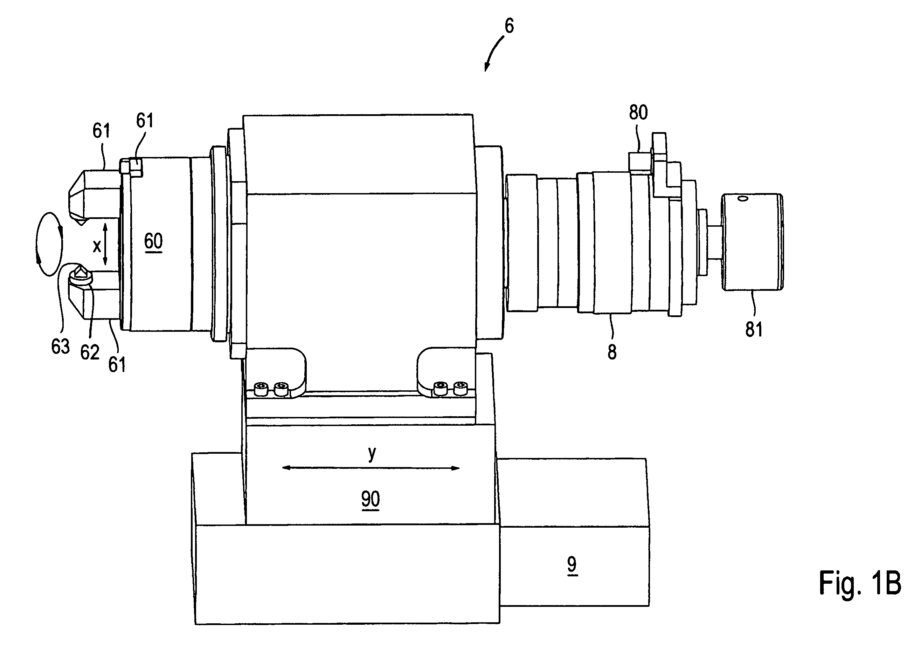

- Figur 1B -: die Plandreheinheit aus Figur 1A, in vergrösserter Ansicht;
- Figur 2A -: die Plandreheinheit gemäss Figur 1B, mit maximaler Öffnung zwi- schen den Drehmeisseln, in prinzipieller Schnittdarstellung;
- Figur 2B -: die Plandreheinheit gemäss Figur 2A, in Fontansicht auf die Dreh- meissel;

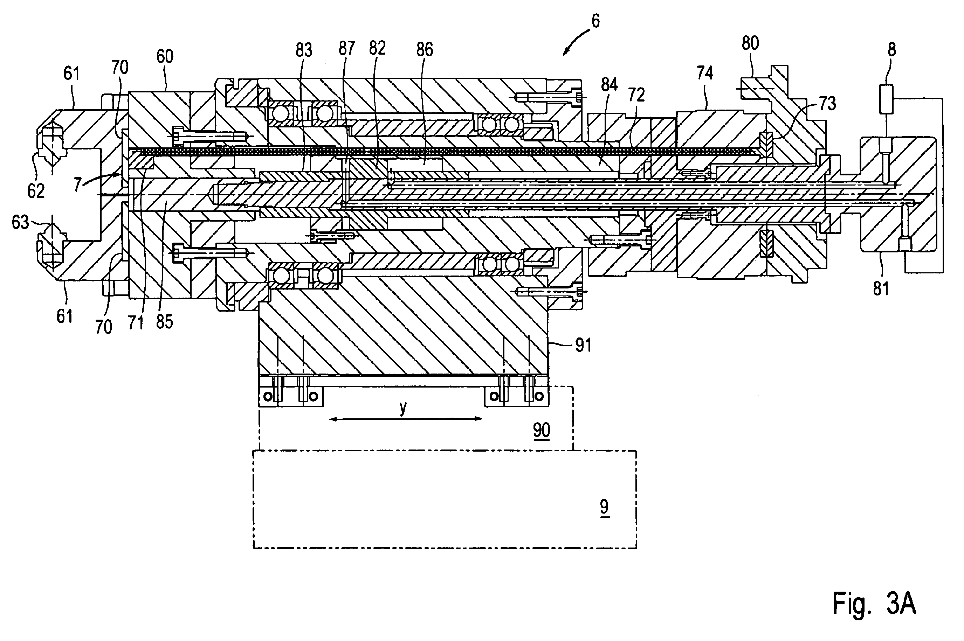

- Figur 3A -: die Plandreheinheit gemäss Figur 1B, mit minimaler Öffnung zwi- schen den Drehmeisseln, in prinzipieller Schnittdarstellung; und

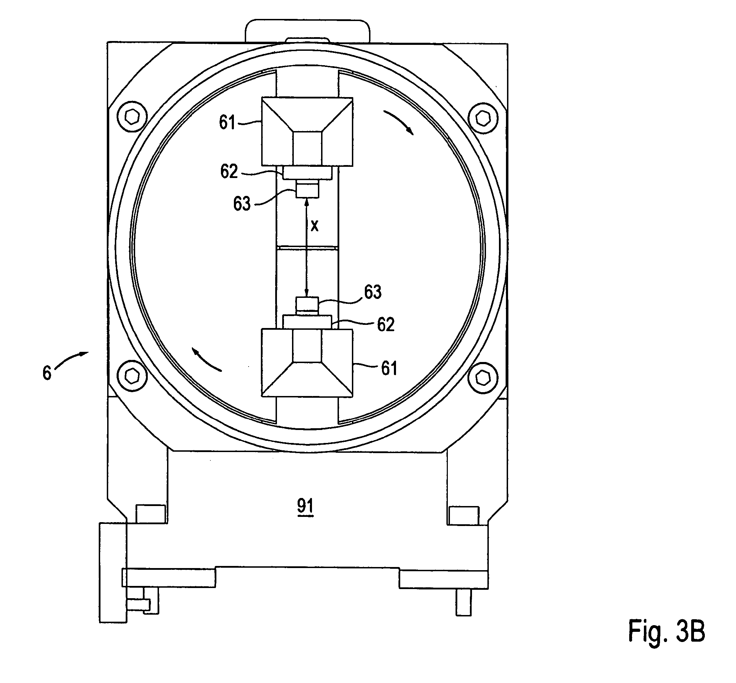

- Figur 3B -: die Plandreheinheit gemäss Figur 3A, in Fontansicht auf die Dreh- meissel.

### Ausführungsbeispiel

Anhand der beiliegenden Zeichnungen erfolgt nachstehend die detaillierte Beschreibung eines Ausführungsbeispiels der erfindungsgemässen Transfermaschine mit einer Plandreheinheit.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1 B

Die Transfermaschine **1 -** hier in beispielhafter Gestalt einer Rundtaktmaschine - hat eine tellerförmige, sich drehende, horizontal angeordnete Transferebene **2** in Form eines Tisches, auf deren Oberseite, nahe dem Aussenumfang mehrere Spannvorrichtungen **3** zur Aufnahme von zu bearbeitenden Werkstücken **4** fest positioniert sind. Ausserhalb der Transferebene **2** sind stationäre Bearbeitungseinheiten **5** aufgestellt, an welche, die Spannvorrichtungen **3** taktweise herangeführt werden. Bei einer Rundtaktmaschine werden die Spannvorrichtungen **3** auf dem Transfertisch im Umlauf taktweise an die Bearbeitungseinheiten **5** herangeführt. Die Anzahl der Spannvorrichtungen **3** könnte höher sein, als jene der Bearbeitungseinheiten **5**, z.B. wenn eine Spannvorrichtung **3** nur zum Beladen mit noch auf der Transfermaschine **1** unbearbeiteten Werkstücken **4** vorgesehen ist. Eine der Bearbeitungseinheiten ist als Plandreheinheit **6** vorhanden.

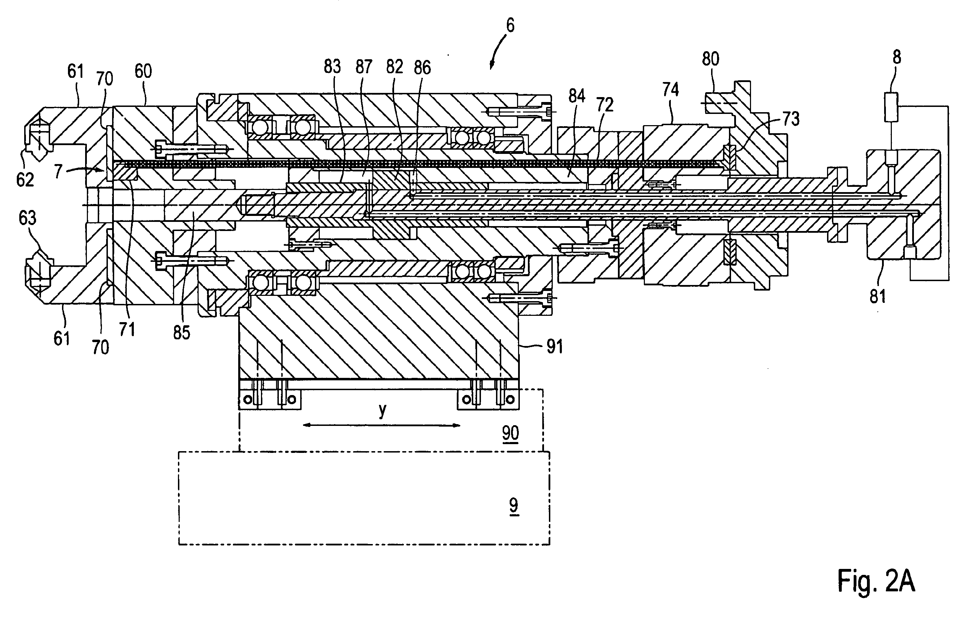

Die Plandreheinheit **6** ruht auf einem Längsschlitten **90,** welcher auf einem Bett **9** in y-Richtung verfahrbar ist. Frontseitig hat die Plandreheinheit **6** einen Plandrehkopf **60,** in dem zwei zueinander gegensinnig in einer x-Richtung längslaufende Planschieber **61** angeordnet sind, die jeweils als Zerspanungswerkzeug einen Drehmeissel **63** tragen. Die Planschieber **61** mit den Drehmeisseln **63** rotieren um eine Horizontalachse. Vorteilhaft sitzt der Drehmeissel **63** auf einem Aufsatzwerkzeug **62.** Am hinteren Teil besitzt die Plandreheinheit **6** eine rotierende Hydraulikeinspeisung **81,** welche mit einem stetig geregeltem Wegeventil **8** verbunden ist (siehe Figur 2A). Der Stecker **80** sitzt auf einem Stator und stellt einen Anschluss zur Datenübertragung an die Steuerung (nicht gezeigt) der Plandreheinheit **6** dar.

### Figuren 2A und 2B

Gegenwärtig sind die beiden Planschieber **61** mit den von diesen getragenen Drehmeisseln **63** mit einem maximalen Hub in der x-Richtung auseinander gefahren. Zur Positionsbestimmung der Planschieber **61** ist im Plandrehkopf **60** ein Messsystem **7** integriert, das sich aus einem Lesekopf **71** und den Massstäben **70** zusammensetzt. Der Lesekopf **71** ist direkt am Plandrehkopf **60** angeordnet, während an jedem der beiden Planschieber **61** ein Massstab **70** vorhanden ist. Vom Messsystem **7,** d.h. von dessen Lesekopf **71,** erstreckt sich ein Kabel **72** im rotierenden Teil der Plandreheinheit **6,** bis in einen Rotor **74,** um den vom Messsystem **7** erfassten Wert induktiv auf eine Statorspule **73** in einem nicht rotierenden Teil der Plandreheinheit **6** für die Weiterbearbeitung zu übertragen. Hierzu ist auf dem Stator ein Stecker **80** angebracht.

Zur Verstellung der Planschieber **61** in der x-Richtung ist an der Spindel **84** eine Vorschubeinheit angebracht, die sich aus einem Hydraulikkolben **82** und einer Kolbenstange **83** zusammensetzt. Der Hydraulikkolben **82** ist konzentrisch zur Spindel **84** angeordnet und liegt zwischen einem hinteren Druckkammerbereich **86** und einem vorderen Druckkammerbereich **87.** Koaxial zur Spindel **84** ist eine Verlängerung **85** der Kolbenstange **83** angeordnet. Die beim Zerspanungsvorgang entstehenden und über die Drehmeissel **63** in die Vorschubeinheit **82,83** eingeleiteten Reaktionskräfte wirken zumindest im wesentlichen auf den Hydraulikkolben **82,** der damit die Spindel **84** kraftmässig axial entlastet. Der Hydraulikkolben **82** wird von der Hydraulikeinspeisung **81** über das stetig geregelte Wegeventil **8** angesteuert. Zur Erhöhung der mit der Plandreheinheit **6** erzielbaren Präzision, kann man ein weiteres Messsystem vorsehen, mit welchem sich die Zustellgeschwindigkeit der Drehmeissel **63** ermitteln lässt.

### Figuren 3A und 3B

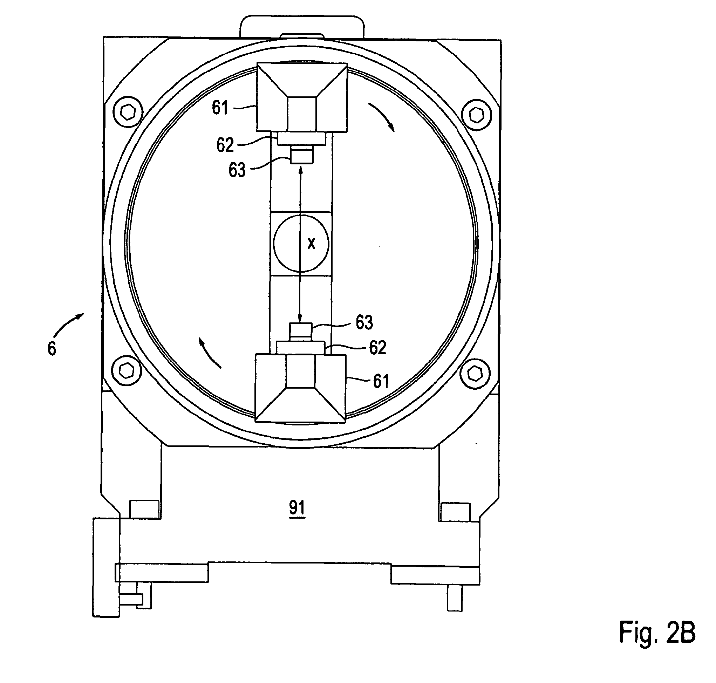

Nun sind die beiden Planschieber **61** mit den von diesen getragenen Drehmeisseln **63** mit einem minimalen Hub in der x-Richtung auseinander gefahren. Im Verhältnis zur vorherigen Hubstellung gemäss den Figuren 2A und 2B sind jetzt die Kolbenstangenverlängerung **85,** die daran axial ansetzende Spindel **84** und der Hydraulikkolben **82** näher in Richtung der Drehmeissel **63** vorgeschoben. Dies bewirkt eine Verengung zwischen den Drehmeisseln **63,** was eine Werkzeugzustellung bedeutet.

## Patentansprüche

1. Transfermaschine **(1)** mit:
a) einer sich longitudinal oder rotierend beweglichen Transferebene **(2),** an deren Peripherie eine Vielzahl von Spannvorrichtungen **(3)** zur Aufnahme der zu bearbeitenden Werkstücke **(4)** angeordnet ist;
b) ausserhalb der Transferebene **(2)** stationären Bearbeitungseinheiten **(5),** an welche die Spannvorrichtungen **(3)** taktweise herangeführt werden; **dadurch gekennzeichnet, dass**
c) zumindest eine Bearbeitungseinheit **(5)** als Plandreheinheit **(6)**, gestaltet ist, mit:
ca) einem Längsschlitten **(90),** auf dem die Plandreheinheit **(6)** ruht und der auf einem Bett **(9)** in einer y-Richtung verfahrbar ist;
cb) einem Plandrehkopf **(60),** in dem zwei zueinander gegensinnig in einer x-Richtung längslaufende Planschieber **(61)** angeordnet sind, die jeweils als Zerspanungswerkzeug einen Drehmeissel **(63)** tragen;
cc) einem Messsystem **(7)** zur Positionsbestimmung der Planschieber **(61);**
cd) einer angetriebenen Spindel **(84)** zur Übertragung des rotierenden Antriebs auf den Plandrehkopf **(60);**
ce) einer Vorschubeinheit **(82,83)** zur Verstellung der Planschieber **(61)** in der x-Richtung, wobei
d) das Messsystem **(7)** im Plandrehkopf **(60)** integriert ist;
e) vom Messsystem **(7)** sich ein Kabel **(72)** im rotierenden Teil der Plandreheinheit **(6)** bis in einen Rotor **(74)** erstreckt, um den vom Messsystem **(7)** erfassten Wert induktiv auf eine Statorspule **(73)** in ein nicht rotierendes Teil der Plandreheinheit **(6)** für die Weiterverarbeitung zu übertragen; und
f) die Vorschubeinheit **(82,83)** zur Verstellung der Planschieber **(61)** in der x-Richtung an der Spindel **(84)** angeordnet ist und von einer Hydraulikeinspeisung **(81)** über ein stetig geregeltes Wegeventil **(8)** angesteuert wird.

2. Transfermaschine **(1)** nach Anspruch 1, **dadurch gekennzeichnet, dass** das Messsystem **(7)** aus einem im Plandrehkopf **(60)** angeordneten Lesekopf **(71)** und einem an jedem Planschieber **(61)** vorhandenen Massstab **(70)** besteht.

3. Transfermaschine **(1)** nach einem der Ansprüche 1 und 2, **dadurch gekennzeichnet, dass** die Vorschubeinheit **(82,83)** einen konzentrisch zur Spindel **(84)** angeordneten und mit der Spindel **(84)** verbundenen Hydraulikkolben **(82)** umfasst.

4. Transfermaschine **(1)** nach einem der Ansprüche 1 bis 3, **dadurch gekennzeichnet, dass**
a) der Hydraulikkolben **(82)** zwischen einem hinteren Druckkammerbereich **(86)** und einem vorderen Druckkammerbereich **(87)** liegt; und
b) die beim Zerspanungsvorgang entstehenden und über die Drehmeissel **(63)** in die Vorschubeinheit **(82,83)** eingeleiteten Reaktionskräfte zumindest im wesentlichen auf den Hydraulikkolben **(82)** wirken, der die Spindel **(84)** kraftmässig axial entlastet.

5. Transfermaschine **(1)** nach einem der Ansprüche 1 bis 4, **dadurch gekennzeichnet, dass** eine Verlängerung **(85)** der Kolbenstange **(83)** koaxial zur Spindel **(84)** angeordnet ist.

6. Transfermaschine **(1)** nach einem der Ansprüche 1 bis 5, **dadurch gekennzeichnet, dass** ein weiteres Messsystem zur Ermittlung der Zustellgeschwindigkeit der Drehmeissel **(63)** vorgesehen ist.

7. Transfermaschine **(1)** nach einem der Ansprüche 1 bis 6, **dadurch gekennzeichnet, dass** die Transfermaschine **(1)** als Längstransfermaschine oder als Rundtaktmaschine ausgebildet ist.

## Claims

1. Transfer machine **(1)** having:
a) a longitudinally movable or rotary transfer plane **(2),** on the periphery of which are arranged a multiplicity of clamping devices **(3)** for accommodating the workpieces **(4)** which are to be machined;
b) outside the transfer plane **(2),** stationary machine units **(5),** on to which the clamping devices **(3)** are guided in a cyclic manner, **characterized in that**
c) at least one machine unit **(5)** is configured as a facing unit **(6)** having:
ca) a longitudinal carriage **(90),** on which the facing unit **(6)** rests and which can be displaced in a y-direction on a bed **(9);**
cb) a facing head **(60),** in which are arranged two radial facing slides **(61)** which run longitudinally, in opposite directions to one another, in an x-direction and each carry, as a machining tool, a turning chisel **(63)**;
cc) a measuring system **(7)**, for determining the position of the radial facing slides **(61);**
cd) a driven spindle **(84),** for transmitting the rotary drive to the facing head **(60);**
ce) an advancement unit **(82,83),** for adjusting the radial facing slides **(61)** in the x-direction, wherein
d) the measuring system **(7)** is integrated in the facing head **(60);**
e) from the measuring system **(7),** a cable **(72)** extends, in the rotating part of the facing unit **(6),** into a rotor **(74)** in order for the value which is detected by the measuring system **(7)** to be transmitted inductively to a stator coil **(73)** in a non-rotating part of the facing unit **(6)** for further processing; and
f) the advancement unit **(82,83),** for adjusting the radial facing slides **(61)** in the x-direction, is arranged on the spindle **(84)** and is activated by a hydraulic infeed **(81)** via a constantly regulated directional control valve **(8).**

2. Transfer machine **(1)** according to Claim 1, **characterized in that** the measuring system **(7)** comprises a reading head **(71),** which is arranged in the facing head **(60),** and a scale **(70),** which is provided on each radial facing slide **(61).**

3. Transfer machine **(1)** according to either of Claims 1 and 2, **characterized in that** the advancement unit **(82, 83)** comprises a hydraulic piston **(82)** which is arranged concentrically in relation to the spindle **(84)** and is connected to the spindle **(84).**

4. Transfer machine **(1)** according to one of Claims 1 to 3, **characterized in that**
a) the hydraulic piston **(82)** is located between a rear pressure-chamber region **(86)** and front pressure-chamber region **(87);** and
b) the reaction forces which occur during machining, and are introduced into the advancement unit **(82,83)** via the turning chisels **(63),** act at least essentially on the hydraulic piston **(82)**, which relieves the spindle **(84)** of loading in the axial direction.

5. Transfer machine **(1)** according to one of Claims 1 to 4, **characterized in that** an extension **(85)** of the piston rod **(83)** is arranged coaxially in relation to the spindle **(84).**

6. Transfer machine **(1)** according to one of Claims 1 to 5, **characterized in that** a further measuring system is provided for determining the advancement speed of the turning chisels **(63).**

7. Transfer machine **(1)** according to one of Claims 1 to 6, **characterized in that** the transfer machine **(1)** is designed in the form of a longitudinal transfer machine or of a revolving transfer machine.

## Revendications

1. Machine de transfert **(1)** comprenant:
a) un plan de transfert **(2)** déplaçable longitudinalement ou en rotation, sur la périphérie duquel est disposée une pluralité de dispositifs de serrage **(3)** pour recevoir les pièces à usiner **(4);**
b) en dehors du plan de transfert **(2),** des unités d'usinage stationnaires **(5),** sur lesquelles les dispositifs de serrage **(3)** sont avancés de manière cadencée, **caractérisée en ce que**
c) au moins une unité d'usinage **(5)** est configurée sous forme d'unité de rotation planaire **(6),** avec
ca) un chariot longitudinal **(90)** sur lequel repose l'unité de rotation planaire **(6)** et qui peut être déplacé sur un lit **(9)** dans une y-direction;
cb) une tête rotative planaire **(60)** dans laquelle sont disposés deux coulisseaux planaires **(61)** s'étendant longitudinalement dans une x-direction en sens contraire l'un par rapport à l'autre, lesquels portent chacun en tant qu'outil d'enlèvement de copeaux un outil de tournage **(63);**
cc) un système de mesure **(7)** pour déterminer la position des coulisseaux planaires **(61);**
cd) une broche entraînée **(84)** pour transférer l'entraînement de rotation à la tête rotative planaire **(60);**
ce) une unité d'avance **(82,83)** pour déplacer les coulisseaux planaires **(61)** dans la x-direction,
d) le système de mesure **(7)** étant intégré dans la tête rotative planaire **(60);**
e) un câble **(72)** s'étendant depuis le système de mesure **(7)** dans la partie rotative de l'unité de rotation planaire **(6)** jusqu'à un rotor **(74),** afin de transférer la valeur détectée par le système de mesure **(7)** de manière inductive à une bobine de stator **(73)** dans une partie non rotative de l'unité de rotation planaire **(6)** en vue d'un usinage supplémentaire; et
f) l'unité d'avance **(82,83)** étant disposée sur la broche **(84)** en vue de déplacer les coulisseaux planaires **(61)** dans la x-direction et étant commandée par une alimentation hydraulique **(81)** par le biais d'un distributeur **(8)** à réglage constant.

2. Machine de transfert **(1)** selon la revendication 1, **caractérisée en ce que** le système de mesure **(7)** se compose d'une tête de lecture **(71)** disposée dans la tête rotative planaire **(60)** et d'une barre de mesure **(70)** prévue sur chaque coulisseau planaire **(61).**

3. Machine de transfert **(1)** selon l'une quelconque des revendications 1 et 2, **caractérisée en ce que** l'unité d'avance **(82,83)** comprend un piston hydraulique **(82)** disposé concentriquement à la broche **(84)** et connecté à la broche **(84).**

4. Machine de transfert **(1)** selon l'une quelconque des revendications 1 à 3, **caractérisée en ce que**
a) le piston hydraulique **(82)** se situe entre une région de chambre de pression arrière **(86)** et une région de chambre de pression avant **(87);** et
b) les forces de réaction produites lors de l'opération d'enlèvement de copeaux et introduites par le biais de l'outil de tournage **(63)** dans l'unité d'avance **(82,83)** agissent au moins essentiellement sur le piston hydraulique **(82),** qui décharge axialement les forces appliquées à la broche **(84).**

5. Machine de transfert **(1)** selon l'une quelconque des revendications 1 à 4, **caractérisée en ce qu'**un prolongement **(85)** de la tige de piston (83) est disposé coaxialement à la broche **(84).**

6. Machine de transfert **(1)** selon l'une quelconque des revendications 1 à 5, **caractérisée en ce qu'**un système de mesure supplémentaire est prévu pour déterminer la vitesse d'avance de l'outil de tournage **(63).**

7. Machine de transfert **(1)** selon l'une quelconque des revendications 1 à 6, **caractérisée en ce que** la machine de transfert **(1)** est réalisée sous forme de machine de transfert longitudinale ou de machine cadencée ronde.
